# FASCICULE DE BREVET EUROPEEN

(11) **EP 3 150 350 B1**
(45) Date de publication et mention de la délivrance du brevet: **11.04.2018**
(21) Numéro de dépôt: 16191684.6
(22) Date de dépôt: 30.09.2016
(51) Int. Cl.: B29C 45/12, B29C 45/33, B29C 45/26, B29C 45/40, B29C 45/14, B29C 45/16, B29C 33/12

(54) **MOULE D'INJECTION ET PROCÉDÉ D'INJECTION ASSOCIÉ**
SPRITZGUSSFORM UND ENTSPRECHENDES SPRITZGUSSVERFAHREN
INJECTION MOULD AND ASSOCIATED INJECTION METHOD

(30) Priorité: 02.10.2015 FR 1559394
(43) Date de publication de la demande: 05.04.2017
(73) Titulaire: JP Grosfilley, 01100 Martignat (FR)
(72) Inventeur: GAUDIN, Philippe, 01100 Groissiat (FR)
(74) Mandataire: Chevalier, Renaud Philippe

(56) Documents cités:
- EP-A1- 0 742 090
- EP-A1- 1 060 868
- US-A1- 2006 249 876

## Description

La présente invention concerne le domaine des moules d'injection plastique et plus particulièrement des moules d'injection permettant l'obtention de pièces bi-matière et/ou de pièces avec un insert, voir par exemple EP1060868 ou EP0742090.

Dans la présente invention, on entendra par « insert » une pièce que l'on inclut dans une autre lors de l'obtention de ladite autre pièce par moulage par exemple. L'insert selon l'invention peut se présenter sous la forme d'une étiquette, d'un film ou d'une pièce par exemple.

Pour poser un insert, plusieurs solutions existent. Une première solution consiste à réaliser l'éjection et la pose de l'insert lorsque le moule d'injection est ouvert. Cette première solution est la moins coûteuse mais présente l'inconvénient d'ajouter le temps d'éjection et de pose au temps d'injection dans un cycle.

Une deuxième solution connue consiste à injecter la ou les pièces finies et à poser le ou les inserts pendant l'éjection. Cette deuxième solution est le plus souvent réalisée sur une presse à injecter verticale car l'insert est sécurisé dans l'empreinte de moulage par l'effet gravité. Cependant, la deuxième solution peut être adaptée pour une presse horizontale, la tenue de l'insert devant être alors sécurisée par aimantation de l'insert par exemple. Dans la deuxième solution connue, le moule d'injection comprend au moins deux parties mobiles montées en rotation sur un axe vertical, une des parties mobiles étant dédiée à l'injection et l'autre des parties mobiles étant dédiée à l'éjection des pièces finies et la pose d'insert. La deuxième solution connue présente l'inconvénient de présenter un temps de cycle long et peu rentable.

L'invention a pour but de remédier à tout ou partie des inconvénients précités en dynamisant le temps de cycle et en le réduisant au maximum.

L'invention a pour objet un moule d'injection comprenant au moins une première partie de moule, au moins une deuxième partie de moule positionnée en regard de la première partie de moule, la première partie ou la deuxième partie de moule étant configurée pour être mobile axialement par rapport respectivement à la deuxième partie ou la première partie de moule entre au moins une position d'ouverture du moule d'injection et une position de fermeture du moule d'injection, au moins un premier poste de travail dit poste d'injection, et au moins un deuxième poste de travail dit poste de pose d'insert, la première partie de moule comprenant :
- au moins un premier chargeur mobile configuré pour se déplacer au moins en rotation au moins entre le premier poste et le deuxième poste, ledit premier chargeur étant positionné entre la première partie de moule et la deuxième partie de moule,
- au moins une première empreinte de moulage destinée à être positionnée au niveau du premier poste et au moins une deuxième empreinte de moulage destinée à être positionnée au niveau du deuxième poste,
la deuxième partie de moule comprenant :
- au moins un deuxième chargeur positionné entre le premier chargeur et la deuxième partie de moule, le deuxième chargeur étant agencé au moins partiellement en regard du premier chargeur,
- au moins une première empreinte complémentaire de moulage destinée à être positionnée au niveau du premier poste et configurée pour coopérer avec la première empreinte de moulage de la première partie de moule destinée à être positionnée au niveau du premier poste, de sorte à délimiter un espace de moulage lorsque le moule d'injection est en position de fermeture et que la première empreinte complémentaire de moulage (7) est positionnée en regard de la première empreinte de moulage (6) de la première partie de moule (2) positionnée au niveau du premier poste (101),
caractérisé en ce que lorsque le moule d'injection est en position de fermeture, le deuxième poste est configuré et agencé pour être accessible depuis l'extérieur du moule d'injection tandis que le premier poste est inaccessible.

Grâce à cette configuration, le deuxième poste peut être utilisé dans des opérations d'éjection et/ou de pose d'insert par exemple, nécessitant l'accessibilité extérieure au moule d'injection simultanément à l'injection parallèle d'une pièce au niveau du premier poste en moule d'injection fermé. Ainsi, le temps de cycle est considérablement réduit et optimisé puisque l'injection n'est pas perturbée par l'ouverture du moule d'injection pour l'accès au poste d'éjection ou de pose d'insert, ce qui permet de produire plusieurs pièces simultanément sans retarder le cycle de production.

Préférentiellement, la première partie de moule est fixe.

De préférence, la deuxième partie de moule est mobile axialement par rapport à la première partie de moule selon un axe transversal du moule d'injection.

Selon une caractéristique de l'invention, le premier chargeur est configuré pour se déplacer au moins en rotation et préférentiellement en rotation et en translation.

Selon une caractéristique de l'invention, le deuxième chargeur est configuré pour se déplacer au moins en rotation et préférentiellement en rotation et en translation.

Selon une caractéristique de l'invention, le premier chargeur se déplace en translation vers le deuxième chargeur et/ou le deuxième chargeur se déplace en translation vers le premier chargeur.

Selon une caractéristique de l'invention, le moule d'injection comprend un troisième poste dit poste d'éjection.

Selon une caractéristique de l'invention, le deuxième chargeur est configuré pour se déplacer au moins en rotation au moins entre le premier poste et le troisième poste. Ainsi, le deuxième chargeur est positionné partiellement en regard du premier chargeur, dans cette configuration seul le premier poste est commun au premier chargeur et au deuxième chargeur.

Selon une caractéristique de l'invention, le troisième poste est configuré et agencé pour être accessible depuis l'extérieur du moule d'injection lorsque ledit moule d'injection est en position de fermeture, ce qui permet d'éjecter la pièce formée sans ouverture du moule d'injection et de permettre simultanément à l'éjection, l'injection d'une autre pièce ainsi que la pose d'un insert sur le deuxième poste.

Selon une caractéristique de l'invention, les empreintes de moulage de la première partie de moule sont des empreintes matrice ou des empreinte noyau et respectivement les empreintes complémentaires de moulage de la deuxième partie de moule sont des empreintes noyau ou des empreintes matrice.

Préférentiellement, les empreintes de moulages de la première partie de moule d'injection sont des empreintes matrice et respectivement les empreintes complémentaires de moulage de la deuxième partie sont des empreintes noyau.

Selon une caractéristique de l'invention, le moule d'injection peut comprendre au moins quatrième poste de travail de surmoulage ou d'assemblage ou de refroidissement ou d'injection d'une autre matière ou de réchauffement ou d'encliquetage ou de soudure miroir ou de soudure par joint surmoulé ou de pose de décor ou de marquage laser.

Selon une caractéristique de l'invention, le quatrième poste est configuré et agencé pour être accessible depuis l'extérieur du moule d'injection lorsque le moule d'injection est en position de fermeture et en fonction de l'activité associée au poste de travail.

Selon une caractéristique de l'invention, le deuxième chargeur est mobile entre le premier poste, le troisième poste et le quatrième poste.

Selon une caractéristique de l'invention, le premier chargeur est mobile en translation en direction du deuxième chargeur et/ou le deuxième chargeur est mobile en translation en direction du premier chargeur.

Selon une caractéristique de l'invention, le moule d'injection est adapté pour une utilisation dans une presse horizontale ou verticale.

Selon une caractéristique de l'invention, le moule d'injection est rotatif.

L'invention concerne un procédé d'injection mettant en oeuvre un moule d'injection selon l'invention, pour une seule pièce, comprenant les étapes suivantes :
a. pose d'un insert dans une empreinte de moulage positionnée au niveau du deuxième poste accessible depuis l'extérieur du moule d'injection lorsque le moule d'injection est fermé,
b. injection d'une première matière sur l'insert posé préalablement, l'injection étant réalisée dans un espace de moulage délimité par une première empreinte de moulage et une première empreinte complémentaire de moulage appairées au niveau du premier poste, lorsque le moule d'injection est fermé,
c. éjection de la pièce injectée avec insert au niveau du deuxième poste ou d'un troisième poste accessible depuis l'extérieur du moule d'injection lorsque le moule d'injection est fermé.

Selon une caractéristique de l'invention, entre les étapes de pose d'insert et/ou d'injection et/ou d'éjection, une étape de translation du premier chargeur ou du deuxième chargeur par rapport respectivement au deuxième chargeur ou au premier chargeur est réalisée.

Selon une caractéristique de l'invention, les étapes de pose d'insert et/ou d'injection et/ou d'éjection sont réalisées en simultanée lorsque plusieurs pièces sont réalisées dans le moule d'injection en même temps.

Selon une caractéristique de l'invention, au moins une étape supplémentaire de surmoulage et/ou de refroidissement et/ou d'injection d'une seconde matière et/ou de deuxième pose d'insert est réalisée avant l'étape d'éjection.

Selon une caractéristique de l'invention, lorsque qu'au moins trois pièces sont en cours de production, à un temps t, le cycle de production est réalisé avec les étapes suivantes :
a. fermeture du moule d'injection,
b. au niveau du premier poste, injection d'une matière destinée à former une première pièce dans un espace de moulage délimité par la première empreinte de moulage et la première empreinte complémentaire de moulage positionnées au niveau du premier poste sur un insert préalablement posé au niveau du deuxième poste,
c. simultanément à l'étape d'injection, au niveau du deuxième poste, pose d'un insert dans la deuxième empreinte de moulage de la première partie de moule, l'insert étant destiné à être surmoulé pour former une deuxième pièce en poste d'injection,
d. simultanément à l'étape d'injection et à l'étape de pose d'insert, au niveau du troisième poste, éjection d'une troisième pièce formée préalablement en poste de pose d'insert et en poste d'injection,
e. répétition des étapes précédentes.

L'invention sera mieux comprise, grâce à la description ci-après, qui se rapporte à des modes de réalisation selon la présente invention, donnés à titre d'exemples non limitatifs et expliqués avec référence aux dessins schématiques annexés, dans lesquels:
- la figure 1 est une vue de dessus des chargeurs du moule d'injection selon l'invention selon une première configuration,
- la figure 2 est une vue partielle en coupe du moule d'injection selon l'invention selon la première configuration en position de fermeture du moule d'injection,
- la figure 3 est une vue partielle en coupe du moule d'injection selon l'invention selon la première configuration en position d'ouverture du moule d'injection,
- la figure 4 est une vue de dessus des chargeurs du moule d'injection selon l'invention selon une deuxième configuration,
- la figure 5 est une vue de dessus des chargeurs du moule d'injection selon l'invention selon une troisième configuration,
- la figure 6 est une vue de dessus des chargeurs du moule d'injection selon l'invention selon une quatrième configuration,
- la figure 7 est une vue de dessus des chargeurs du moule d'injection selon l'invention selon une cinquième configuration,
- la figure 8 est une vue de dessus des chargeurs du moule d'injection selon l'invention selon une sixième configuration.

Pour la description du moule d'injection qui va suivre et selon l'invention, le moule d'injection peut être utilisé en position horizontale ou en position verticale.

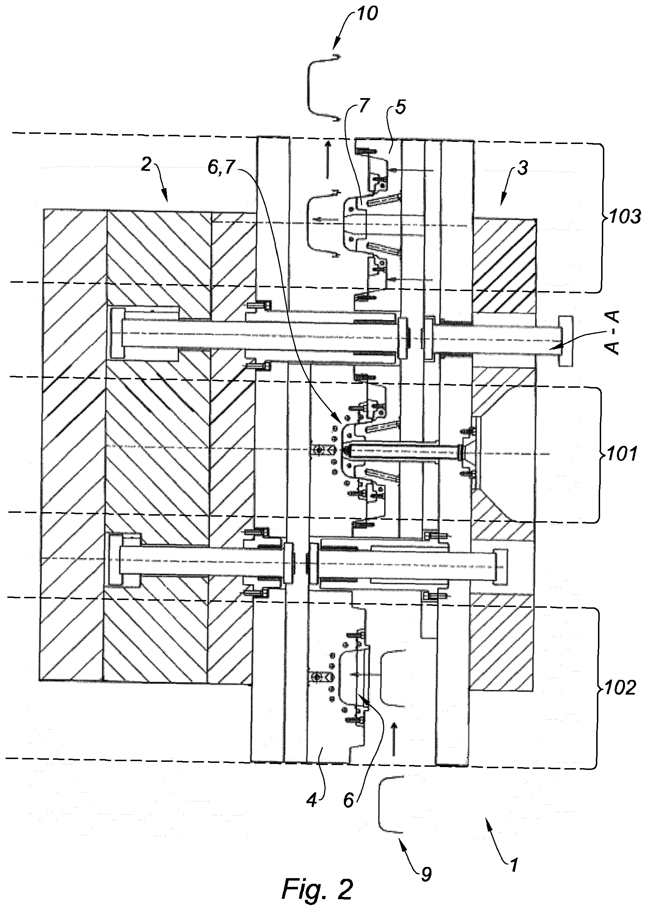

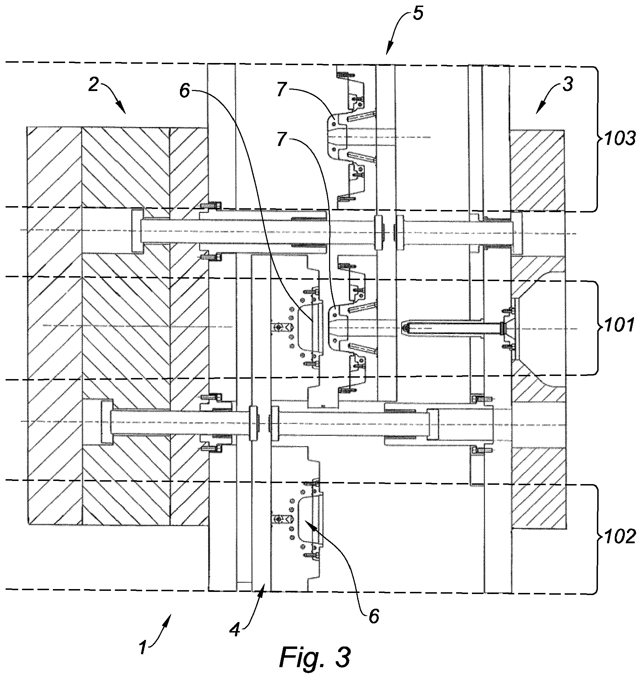

En référence aux figures 2 et 3, le moule d'injection 1 selon l'invention comprend une première partie de moule 2, une deuxième partie de moule 3. La première partie de moule 2 est positionnée en regard de la deuxième partie de moule 3.

Comme illustré aux figures 2 et 3, la première partie de moule 3 est fixe tandis que la deuxième partie de moule 2 est mobile axialement par rapport à la première partie de moule 3 selon un axe transversal A-A du moule d'injection.

Le déplacement axial de la deuxième partie de moule 3 est réalisé au moins entre une position d'ouverture illustrée en figure 3 et une position de fermeture illustrée en figure 2.

La première partie de moule 2 comprend un premier chargeur 4 mobile configuré pour se déplacer au moins en rotation et préférentiellement en rotation et en translation. Le premier chargeur 4 est positionné entre la première partie de moule 2 et la deuxième partie de moule 3 comme visible aux figures 2 et 3.

La première partie de moule 2 comprend en outre une première empreinte de moulage 6, préférentiellement, une empreinte de moulage du type matrice comme illustré aux figures 2 et 3. La première partie de moule 2 comprend en outre une deuxième empreinte de moulage 6, préférentiellement, une empreinte de moulage du type matrice comme illustré aux figures 2 et 3.

La deuxième partie de moule 3 comprend en outre un deuxième chargeur 5 mobile configuré pour se déplacer au moins en rotation et préférentiellement en rotation et en translation.

La deuxième partie de moule 3 comprend en outre une première empreinte complémentaire de moulage 7, préférentiellement, une première empreinte de moulage du type noyau comme illustré aux figures 2 et 3. La première empreinte complémentaire de moulage 7 est configurée pour coopérer avec la première empreinte de moulage 6 de la première partie de moule 2 positionnée au niveau du premier poste 101, de sorte à délimiter un espace de moulage lorsque le moule d'injection 1 est en position de fermeture et que la première empreinte complémentaire de moulage 7 est positionnée en regard de la première empreinte de moulage 6 de la première partie de moule 2 positionnée au niveau du premier poste 101.

Dans l'exemple illustré aux figures 2 et 3, le premier chargeur 4 se déplace en translation vers le deuxième chargeur 5 et/ou le deuxième chargeur 5 se déplace en translation vers le premier chargeur 4.

En outre, le moule d'injection 1 comprend en outre une pluralité de postes de travail 101, 102, 103, 104, 104', 104", 105. Plus particulièrement, le moule d'injection 1 comprend un premier poste 101 dit poste d'injection, un deuxième poste 102 dit poste de pose d'insert, un troisième poste 103 dit poste d'éjection, un quatrième poste 104, 104', 104" dit poste de surmoulage et/ou d'assemblage et/ou de refroidissement, un cinquième poste 105 dit poste d'injection d'une deuxième matière. Bien évidemment d'autres postes peuvent être envisagés sans sortir du cadre de l'invention.

Dans les figures représentant chaque configuration du moule d'injection 1, au niveau de chaque poste, une paire d'empreintes de moulage et une paire d'empreintes complémentaires de moulage sont représentées. Bien entendu, le nombre d'empreintes de moulage et d'empreintes complémentaire de moulage n'est pas limité.

Quelle que soit la configuration du moule d'injection 1 selon l'invention, lorsque le moule d'injection 1 est en position de fermeture, le deuxième poste 102 est configuré et agencé pour être accessible depuis l'extérieur du moule d'injection 1 tandis que le premier poste 101 est inaccessible. Préférentiellement, et comme illustré le troisième poste 103 est configuré et agencé pour être accessible depuis l'extérieur du moule d'injection 1 lorsque le moule d'injection 1 est en position de fermeture.

Quelle que soit la configuration du moule d'injection 1, le premier chargeur 4 et le deuxième chargeur 5 présentent une portion au niveau du poste d'injection 101 de manière à ce que la première paire d'empreintes de moulage 6 du premier chargeur 4 et la première paire d'empreintes complémentaires de moulage 7 du deuxième chargeur 5 soient appairées dans la position de fermeture du moule d'injection 1 et en regard l'une de l'autre dans la position d'ouverture du moule d'injection 1.

Quelle que soit la configuration du moule d'injection 1, la deuxième paire d'empreintes de moulage 6 de la première partie de moule 2 positionnée au niveau du deuxième poste 102 est accessible depuis l'extérieur du moule d'injection 1 en position de fermeture du moule d'injection 1. La deuxième paire d'empreintes complémentaires de moulage 7 de la deuxième partie de moule 3 positionnée au niveau du troisième poste 103 est accessible depuis l'extérieur du moule d'injection 1 en position de fermeture du moule d'injection 1.

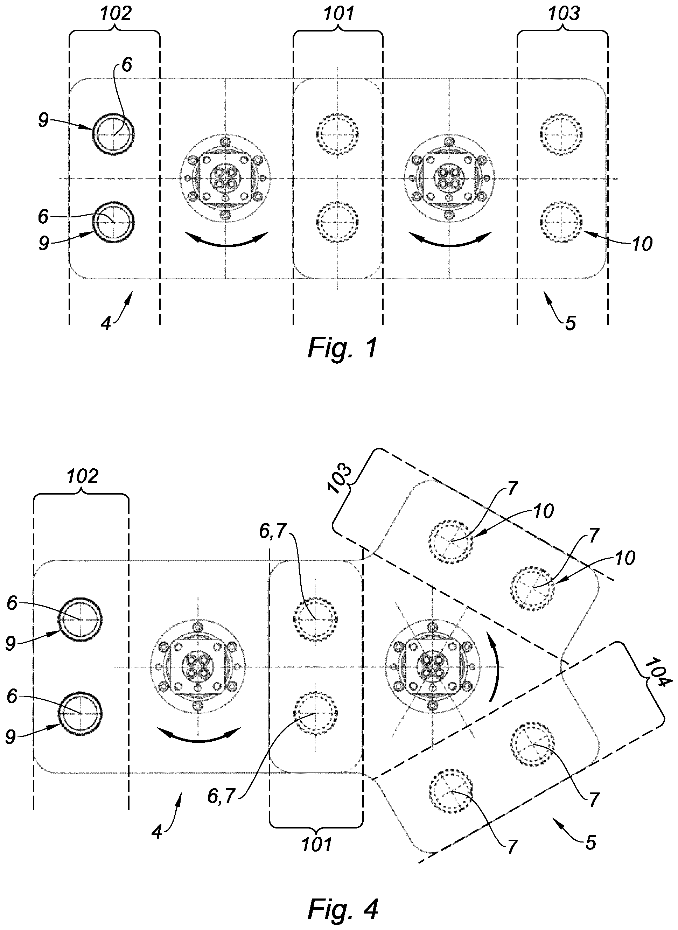

La première configuration du moule d'injection 1 va maintenant être décrite en référence aux figures 1 à 3.

Selon la première configuration, le premier chargeur 4 est mobile en rotation entre le premier poste 101 et le deuxième poste 102. Le deuxième chargeur 5 est mobile en rotation entre le premier poste 101 et le troisième poste 103.

La première partie de moule 2 comprend une deuxième paire d'empreintes de moulage 6 positionnée au niveau du deuxième poste 102. La deuxième partie de moule 3 comprend en outre une deuxième paire d'empreintes complémentaires de moulage 7 ménagée au niveau du troisième poste 103.

Un cycle d'injection selon le procédé d'injection selon l'invention est réalisé comme décrit ci-après, le procédé étant mis en oeuvre dans un moule d'injection selon l'invention et selon la première configuration et lorsqu'à chaque poste une seule empreinte de moulage et une seule empreinte complémentaire de moulage sont présentes. Le cycle de production décrit ci-après concerne la production d'une seule pièce. Tout d'abord, on pose un insert 9 dans la deuxième empreinte de moulage 6 de la première partie de moule 2 au niveau du deuxième poste 102, le moule d'injection étant fermé. Puis, on ouvre le moule d'injection 1 et le premier chargeur 4 se dégage axialement du deuxième chargeur 5 ou l'inverse afin que le premier chargeur 4 puisse tourner pour amener l'insert 9 au niveau du premier poste 101 dans la première empreinte de moulage 6 de la première partie de moule 2. On ferme le moule d'injection 1 et on injecte une première matière sur l'insert 9 dans l'espace délimité par la première empreinte de moulage 6 et la première empreinte complémentaire de moulage 7. Puis, on ouvre le moule d'injection 1 et le deuxième chargeur 5 se dégage axialement du premier chargeur 4 ou l'inverse afin que le deuxième chargeur 5 puisse tourner pour amener la pièce injectée 10 avec insert 9 au niveau du troisième poste 103 pour éjection.

L'avantage du moule d'injection selon l'invention, est qu'on peut utiliser les différents postes 101, 102, 103 simultanément pour fabriquer plusieurs pièces 10.

Ainsi, lorsque qu'au moins trois pièces sont en cours de production, à un temps t, le cycle de production est comme ci-après. On ferme le moule d'injection 1. Au niveau du premier poste 101, on injecte une matière destinée à former une première pièce dans un espace de moulage délimité par la première empreinte de moulage et la première empreinte complémentaire de moulage positionnées au niveau du premier poste 101 sur un insert préalablement posé au niveau du deuxième poste 102. Simultanément à l'étape d'injection, au niveau du deuxième poste 102, on pose un insert dans la deuxième empreinte de moulage 6 de la première partie de moule 2, l'insert étant destiné à être surmoulé pour former une deuxième pièce en poste d'injection 101. Simultanément à l'étape d'injection et à l'étape de pose d'insert, au niveau du troisième poste 103 on éjecte une troisième pièce formée préalablement en poste de pose d'insert 102 et en poste d'injection 101. Les étapes décrites ci-avant sont répétées afin de produire plusieurs pièces simultanément.

En variante non représentée, pour la formation d'une même pièce l'étape de pose d'insert est effectuée après l'étape d'injection.

Dans une autre variante non représentée, plusieurs étapes de pose d'insert peuvent être réalisées avant ou après l'étape d'injection.

La deuxième configuration du moule d'injection 1 va maintenant être décrite en référence à la figure 4.

La deuxième configuration du moule d'injection 1 selon l'invention diffère de la première configuration en ce que le moule d'injection 1 comprend un poste supplémentaire : un quatrième poste 104 dit poste de surmoulage et/ou assemblage et/ou refroidissement.

Selon la deuxième configuration, le premier chargeur 4 est mobile en rotation entre le premier poste 101 et le deuxième poste 102. Le deuxième chargeur 5 est mobile en rotation entre le premier poste 101, le quatrième poste 104 et le troisième poste 103.

La première partie de moule 2 comprend une deuxième paire d'empreintes de moulage 6 positionnée au niveau du deuxième poste 102.

La deuxième partie de moule 3 comprend une deuxième paire d'empreintes complémentaires de moulage 7 ménagée au niveau du troisième poste 103. La deuxième partie de moule 3 comprend en outre une troisième paire d'empreintes complémentaires de moulage 7 ménagée au niveau du quatrième poste 104.

En variante non représentée, le premier chargeur 4 est mobile en rotation entre le premier poste 101, le deuxième poste 102 et le quatrième poste 104. Le deuxième chargeur 5 est mobile en rotation entre le premier poste 101 et le troisième poste 103. Ainsi, la première partie de moule 2 comprend une deuxième paire d'empreintes de moulage 6 positionnée au niveau du deuxième poste 102 et une troisième paire d'empreintes de moulage 6 ménagée au niveau du quatrième poste 104 et la deuxième partie de moule 3 comprend une deuxième paire d'empreintes complémentaires de moulage 7 ménagée au niveau du troisième poste 103.

Un cycle d'injection selon le procédé d'injection selon l'invention est réalisé comme décrit ci-après, le procédé étant mis en oeuvre dans un moule d'injection selon l'invention et selon la deuxième configuration et lorsqu'à chaque poste une seule empreinte de moulage et une seule empreinte complémentaire de moulage sont présentes. Le cycle de production décrit ci-après concerne la production d'une seule pièce. Tout d'abord, on pose un insert 9 dans la deuxième empreinte de moulage 6 de la première partie de moule 2 au niveau du deuxième poste 102, le moule d'injection étant fermé. Puis, on ouvre le moule d'injection 1 et le premier chargeur 4 se dégage axialement du deuxième chargeur 5 ou l'inverse afin que le premier chargeur 4 puisse tourner pour amener l'insert 9 au niveau du premier poste 101 dans la première empreinte de moulage 6 de la première partie de moule 2. On ferme le moule d'injection 1 et on injecte une première matière sur l'insert 9 dans l'espace délimité par la première empreinte de moulage 6 et la première empreinte complémentaire de moulage 7. Puis, on ouvre le moule d'injection 1 et le deuxième chargeur 5 se dégage axialement du premier chargeur 4 ou l'inverse afin que le deuxième chargeur 5 puisse tourner pour amener la pièce injectée 10 avec insert 9 au niveau du quatrième poste 104. On ferme le moule d'injection 1 et on surmoule par exemple la pièce injectée 10 avec insert 9. Puis, on ouvre le moule d'injection 1 et le deuxième chargeur 5 se dégage axialement du premier chargeur 4 ou l'inverse afin que le deuxième chargeur 5 puisse tourner pour amener la pièce injectée et surmoulée 10 avec insert 9 au niveau du troisième poste 103 pour éjection.

L'avantage du moule d'injection selon l'invention, est qu'on peut utiliser les différents postes 101, 102, 103 simultanément pour fabriquer plusieurs pièces 10.

Ainsi, lorsque qu'au moins quatre pièces sont en cours de production, à un temps t, le cycle de production est comme ci-après. On ferme le moule d'injection 1. Au niveau du premier poste 101, on injecte une matière destinée à former une première pièce dans un espace de moulage délimité par la première empreinte de moulage et la première empreinte complémentaire de moulage positionnées au niveau du premier poste 101 sur un insert préalablement posé au niveau du deuxième poste 102. Simultanément à l'étape d'injection, au niveau du deuxième poste 102, on pose un insert dans la deuxième empreinte de moulage 6 de la première partie de moule 2, l'insert 9 étant destiné à être surmoulé pour former une deuxième pièce en poste d'injection 101. Simultanément aux étapes d'injection et de pose d'insert au niveau du quatrième poste 104, une troisième pièce 10 injectée avec insert 9 est surmoulée. Simultanément aux étapes d'injection, de pose d'insert, et de surmoulage, au niveau du troisième poste 103, on éjecte une quatrième pièce 10 formée préalablement aux premier, deuxième et quatrième postes 101, 102, 104.

Les étapes décrites ci-avant sont répétées afin de produire plusieurs pièces simultanément en fonction du nombre d'empreintes de moulage et d'empreintes complémentaires de moulage.

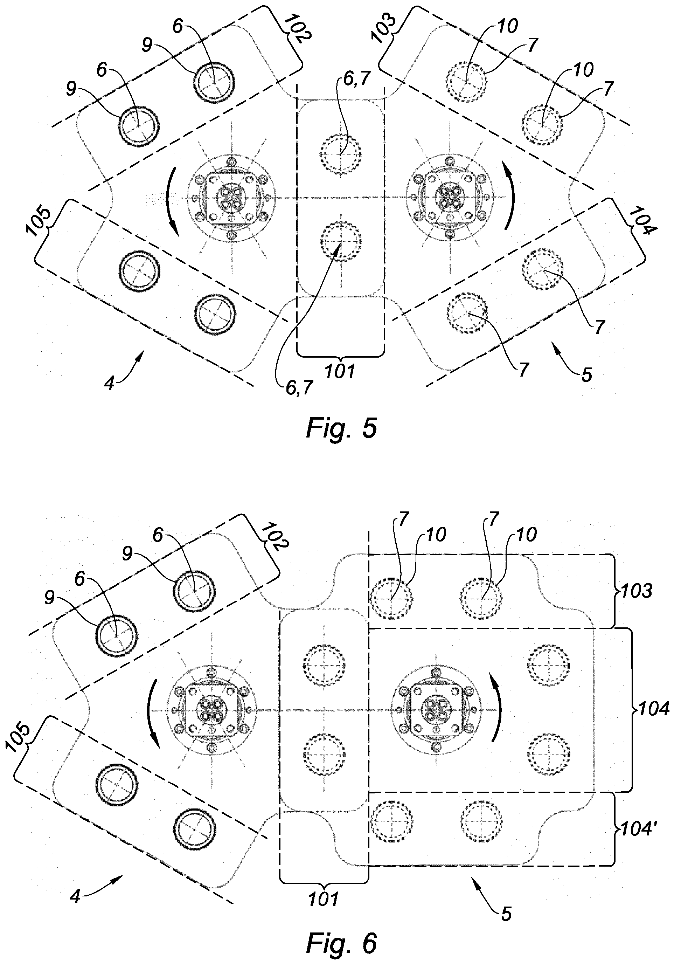

La troisième configuration du moule d'injection 1 va maintenant être décrite en référence à la figure 5.

La troisième configuration diffère de la première configuration en ce que le moule d'injection 1 comprend cinq postes : un quatrième poste 104 tel que celui décrit dans la deuxième configuration et un cinquième poste d'injection 105 d'une deuxième matière, par exemple.

Selon la troisième configuration, le premier chargeur 4 est mobile en rotation entre le premier poste 101, le deuxième poste 102 et le cinquième poste 105. Le deuxième chargeur 5 est mobile en rotation entre le premier poste 101, le quatrième poste 104 et le troisième poste 103.

La première partie de moule 2 comprend une deuxième paire d'empreintes de moulage 6 positionnée au niveau du deuxième poste 102. La première partie de moule 2 comprend en outre une troisième paire d'empreintes de moulage 6 positionnée au niveau du cinquième poste 105.

La deuxième partie de moule 3 comprend une deuxième paire d'empreintes complémentaires de moulage 7 ménagée au niveau du troisième poste 103. La deuxième partie de moule 3 comprend en outre une troisième paire d'empreintes complémentaires de moulage 7 ménagée au niveau du quatrième poste 104.

Le procédé d'injection mis en oeuvre par un moule d'injection selon la troisième configuration est sensiblement identique au procédé d'injection mis en oeuvre par un moule d'injection 1 selon la deuxième configuration à l'exception d'une étape supplémentaire d'injection d'une seconde matière réalisée après la pose de l'insert 9. Ainsi, le procédé d'injection mis en oeuvre par un moule d'injection selon la troisième configuration peut être déduit sans ambigüité du procédé d'injection mis en oeuvre par un moule d'injection selon la deuxième configuration décrit ci-avant, que ce soit pour une seule pièce ou pour une pluralité de pièces.

En variante non représentée de la troisième configuration, les quatrième 104 et cinquième 105 postes sont inversés. C'est-à-dire que le premier chargeur 4 est mobile en rotation entre le premier poste 101, le deuxième poste 102 et le quatrième poste 104, le deuxième chargeur 5 est mobile en rotation entre le premier poste 101, le cinquième poste 105 et le troisième poste 103. Ainsi, la première partie de moule 2 comprend une deuxième paire d'empreintes de moulage 6 positionnée au niveau du deuxième poste 102 et une troisième paire d'empreintes de moulage 6 positionnée au niveau du quatrième poste 104. La deuxième partie de moule 3 comprend une deuxième paire d'empreintes complémentaires de moulage 7 ménagée au niveau du troisième poste 103 et une troisième paire d'empreintes complémentaires de moulage 7 ménagée au niveau du cinquième poste 105.

La quatrième configuration du moule d'injection 1 va maintenant être décrite en référence à la figure 6.

La quatrième configuration diffère de la première configuration en ce que le moule d'injection 1 comprend six postes : un quatrième poste 104 tel que celui décrit dans la deuxième configuration, un cinquième poste d'injection 105 tel que celui décrit dans la troisième configuration et un sixième poste 104' correspondant à un autre poste de surmoulage et/ou refroidissement et/ou assemblage tel que le quatrième poste 104.

Selon la quatrième configuration, le premier chargeur 4 est mobile en rotation entre le premier poste 101, le deuxième poste 102 et le cinquième poste 105. Le deuxième chargeur 5 est mobile en rotation entre le premier poste 101, le quatrième poste 104, le sixième poste 104' et le troisième poste 103.

La première partie de moule 2 comprend une deuxième paire d'empreintes de moulage 6 positionnée au niveau du deuxième poste 102. La première partie de moule 2 comprend en outre une troisième paire d'empreintes de moulage 6 positionnée au niveau du cinquième poste 105.

La deuxième partie de moule 3 comprend une deuxième paire d'empreintes complémentaires de moulage 7 ménagée au niveau du troisième poste 103. La deuxième partie de moule 3 comprend en outre une troisième paire d'empreintes complémentaires de moulage 7 ménagée au niveau du quatrième poste 104. La deuxième partie de moule 3 comprend en outre une quatrième paire d'empreintes complémentaires de moulage 7 ménagée au niveau du sixième poste 104'.

Le procédé d'injection mis en oeuvre par un moule d'injection selon la quatrième configuration est sensiblement identique au procédé d'injection mis en oeuvre par un moule d'injection 1 selon la troisième configuration à l'exception d'une étape supplémentaire de surmoulage et/ou de refroidissement et/ou d'assemblage réalisée après la première étape de surmoulage et/ou de refroidissement et/ou d'assemblage au niveau du quatrième poste 104. Ainsi, le procédé d'injection mis en oeuvre par un moule d'injection selon la quatrième configuration peut être déduit sans ambigüité du procédé d'injection mis en oeuvre par un moule d'injection selon la troisième configuration décrit ci-avant, que ce soit pour une seule pièce ou pour une pluralité de pièces.

En variante non représentée de la quatrième configuration, les quatrième 104 et cinquième 105 postes sont inversés. C'est-à-dire que le premier chargeur 4 est mobile en rotation entre le premier poste 101, le deuxième poste 102 et le quatrième poste 104, le deuxième chargeur 5 est mobile en rotation entre le premier poste 101, le cinquième poste 105 et le troisième poste 103. Ainsi, la première partie de moule 2 comprend une deuxième paire d'empreintes de moulage 6 positionnée au niveau du deuxième poste 102 et une troisième paire d'empreintes de moulage 6 positionnée au niveau du quatrième poste 104. La deuxième partie de moule 3 comprend une deuxième paire d'empreintes complémentaires de moulage 7 ménagée au niveau du troisième poste 103, une troisième paire d'empreintes complémentaires de moulage 7 ménagée au niveau du cinquième poste 105 et une quatrième paire d'empreintes complémentaires de moulage 7 ménagée au niveau du sixième poste 104'.

Dans une autre variante non représentée, le premier chargeur 4 est mobile en rotation entre le premier poste 101, le deuxième poste 102, le cinquième poste 105 et le sixième poste 104', le deuxième chargeur 5 est mobile en rotation entre le premier poste 101, le quatrième poste 104 et le troisième poste 103, l'étape prévue au sixième poste 104' étant réalisée avant l'étape prévue au cinquième poste 105 ou avant l'étape prévue au premier poste 101.

Dans une autre variante non représentée, on peut combiner les deux variantes précédemment décrites.

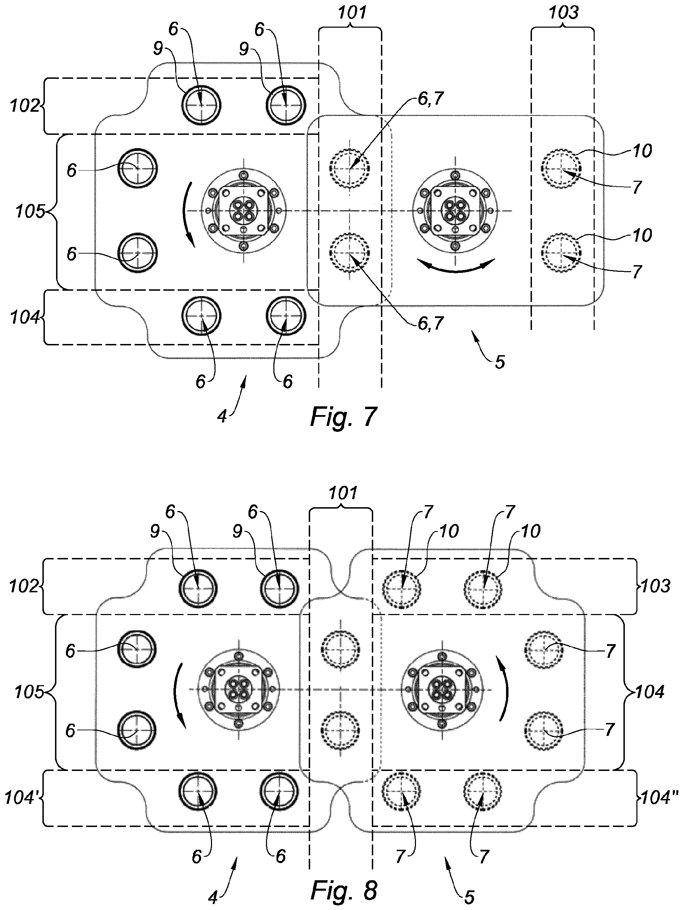

La cinquième configuration du moule d'injection 1 va maintenant être décrite en référence à la figure 7.

La cinquième configuration diffère de la première configuration en ce que le moule d'injection 1 comprend cinq postes : un quatrième poste 104 tel que celui décrit dans la deuxième configuration et un cinquième poste d'injection 105 tel que celui décrit dans la troisième configuration.

Selon la cinquième configuration, le premier chargeur 4 est mobile en rotation entre le premier poste 101, le deuxième poste 102, le quatrième poste 104 et le cinquième poste 105. Le deuxième chargeur 5 est mobile en rotation entre le premier poste 101 et le troisième poste 103.

La première partie de moule 2 comprend une deuxième paire d'empreintes de moulage 6 positionnée au niveau du deuxième poste 102. La première partie de moule 2 comprend en outre une troisième paire d'empreintes de moulage 6 positionnée au niveau du quatrième poste 104 et une quatrième paire d'empreintes de moulage 6 positionnée au niveau du cinquième poste 105.

La deuxième partie de moule 3 comprend une deuxième paire d'empreintes complémentaires de moulage 7 ménagée au niveau du troisième poste 103.

Le procédé d'injection mis en oeuvre par un moule d'injection selon la cinquième configuration est sensiblement identique au procédé d'injection mis en oeuvre par un moule d'injection 1 selon la première configuration à l'exception de deux étapes supplémentaires réalisées avant l'étape d'injection au niveau du premier poste 101. Ainsi, le procédé d'injection mis en oeuvre par un moule d'injection selon la cinquième configuration peut être déduit sans ambigüité du procédé d'injection mis en oeuvre par un moule d'injection selon la première configuration décrit ci-avant, que ce soit pour une seule pièce ou pour une pluralité de pièces.

En variante non représentée, le premier chargeur 4 est mobile en rotation entre le premier poste 101 et le deuxième poste 102 et le deuxième chargeur 5 est mobile en rotation entre le premier poste 101, le quatrième poste 104, le cinquième poste 105 et le troisième poste 103. Ainsi, les étapes prévues au quatrième et cinquième poste 104, 105 sont réalisées après l'étape prévue au premier poste 101.

La sixième configuration du moule d'injection 1 va maintenant être décrite en référence à la figure 8.

La sixième configuration diffère de la première configuration en ce que le moule d'injection 1 comprend sept postes : un quatrième poste 104 tel que celui décrit dans la deuxième configuration, un cinquième poste d'injection 105 tel que celui décrit dans la troisième configuration, un sixième poste 104' tel que celui décrit dans la quatrième configuration et un septième poste 104" correspondant à un autre poste de surmoulage et/ou refroidissement et/ou assemblage tel que le quatrième poste 104 et le sixième poste 104'.

Selon la sixième configuration, le premier chargeur 4 est mobile en rotation entre le premier poste 101, le deuxième poste 102, le cinquième poste 105 et le sixième poste 104. Le deuxième chargeur 5 est mobile en rotation entre le premier poste 101, le quatrième poste 104, le septième poste 104" et le troisième poste 103.

La première partie de moule 2 comprend une deuxième paire d'empreintes de moulage 6 positionnée au niveau du deuxième poste 102. La première partie de moule 2 comprend en outre une troisième paire d'empreintes de moulage 6 positionnée au niveau du cinquième poste 105 et une quatrième paire d'empreintes de moulage 6 positionnée au niveau du sixième poste 104'.

La deuxième partie de moule 3 comprend une deuxième paire d'empreintes complémentaires de moulage 7 ménagée au niveau du troisième poste 103. La deuxième partie de moule 3 comprend en outre une troisième paire d'empreintes complémentaires de moulage 7 ménagée au niveau du quatrième poste 104. La deuxième partie de moule 3 comprend une quatrième paire d'empreintes complémentaires de moulage 7 ménagée au niveau du septième poste 104".

Le procédé d'injection mis en oeuvre par un moule d'injection selon la sixième configuration est sensiblement identique au procédé d'injection mis en oeuvre par un moule d'injection 1 selon la cinquième configuration à l'exception de deux étapes supplémentaires réalisées après l'étape d'injection au niveau du premier poste 101. Ainsi, le procédé d'injection mis en oeuvre par un moule d'injection selon la sixième configuration peut être déduit sans ambigüité du procédé d'injection mis en oeuvre par un moule d'injection selon la cinquième configuration décrit ci-avant, que ce soit pour une seule pièce ou pour une pluralité de pièces.

En variante non représentée, les quatrième 104 et cinquième 105 postes sont inversés. Ainsi, le premier chargeur 4 est mobile en rotation entre le premier poste 101, le deuxième poste 102, le quatrième poste 104 et le sixième poste 104. Le deuxième chargeur 5 est mobile en rotation entre le premier poste 101, le cinquième poste 105, le septième poste 104" et le troisième poste 103.

D'autres variantes peuvent être réalisées en intervertissant au choix le quatrième poste 104, le cinquième poste 105, le sixième post 104' et septième poste 104" sans sortir du cadre de l'invention.

Bien entendu, l'invention n'est pas limitée aux configurations et modes de réalisation décrits et représentés aux figures annexées. Des modifications restent possibles, notamment du point de vue de la constitution des divers éléments ou par substitution d'équivalents techniques, sans sortir pour autant du domaine de protection de l'invention.

## Revendications

1. Moule d'injection (1) comprenant au moins une première partie de moule (2), au moins une deuxième partie de moule (3) positionnée en regard de la première partie de moule (2), la première partie (2) ou la deuxième partie (3) de moule étant configurée pour être mobile axialement par rapport respectivement à la deuxième partie (3) ou la première partie (2) de moule entre au moins une position d'ouverture du moule d'injection (1) et une position de fermeture du moule d'injection (1), au moins un premier poste de travail (101) dit poste d'injection, et au moins un deuxième poste de travail (102) dit poste de pose d'insert, la première partie de moule (2) comprenant :
- au moins un premier chargeur mobile (4) configuré pour se déplacer au moins en rotation au moins entre le premier poste (101) et le deuxième poste (102), ledit premier chargeur (4) étant positionné entre la première partie de moule (2) et la deuxième partie de moule (3),
- au moins une première empreinte de moulage (6) destinée à être positionnée au niveau du premier poste (101) et au moins une deuxième empreinte de moulage (6) destinée à être positionnée au niveau du deuxième poste (102),
la deuxième partie de moule (3) comprenant :
- au moins un deuxième chargeur (5) positionné entre le premier chargeur (4) et la deuxième partie de moule (3), le deuxième chargeur (5) étant agencé au moins partiellement en regard du premier chargeur (4),
- au moins une première empreinte complémentaire de moulage (7) destinée à être positionnée au niveau du premier poste (101) et configurée pour coopérer avec la première empreinte de moulage (6) de la première partie de moule (2) destinée à être positionnée au niveau du premier poste (101), de sorte à délimiter un espace de moulage lorsque le moule d'injection (1) est en position de fermeture et que la première empreinte complémentaire de moulage (7) est positionnée en regard de la première empreinte de moulage (6) de la première partie de moule (2) positionnée au niveau du premier poste (101),
**caractérisé en ce que** lorsque le moule d'injection (1) est en position de fermeture, le deuxième poste (102) est configuré et agencé pour être accessible depuis l'extérieur du moule d'injection (1) tandis que le premier poste (101) est inaccessible.

2. Moule d'injection selon la revendication 1, comprenant un troisième poste (103) dit poste d'éjection.

3. Moule d'injection selon la revendication 2, dans lequel le deuxième chargeur (5) est configuré pour se déplacer au moins en rotation au moins entre le premier poste (101) et le troisième poste (103).

4. Moule d'injection selon l'une quelconque des revendications 2 ou 3, dans lequel le troisième poste (103) est configuré et agencé pour être accessible depuis l'extérieur du moule d'injection (1) lorsque ledit moule d'injection (1) est en position de fermeture.

5. Moule d'injection selon l'une quelconque des revendications 1 à 4, dans lequel les empreintes de moulage (6) de la première partie de moule sont des empreintes matrice ou des empreinte noyau et respectivement les empreintes complémentaires de moulage (7) de la deuxième partie de moule (3) sont des empreintes noyau ou des empreintes matrice.

6. Moule d'injection selon l'une quelconque des revendications 1 à 5, comprenant au moins un quatrième poste de travail (104) de surmoulage ou d'assemblage ou de refroidissement ou d'injection d'une autre matière ou de réchauffement ou d'encliquetage ou de soudure miroir ou de soudure par joint surmoulé ou de pose de décor ou de marquage laser.

7. Moule d'injection selon la revendication 6, dans lequel le quatrième poste (104) est configuré et agencé pour être accessible depuis l'extérieur du moule d'injection (1) lorsque le moule d'injection (1) est en position de fermeture.

8. Moule d'injection selon l'une quelconque des revendications 5 ou 6, dans lequel le deuxième chargeur (5) est mobile entre le premier poste (101), le troisième poste (103) et le quatrième poste (104).

9. Moule d'injection, selon l'une quelconque des revendications 1 à 8, dans lequel le premier chargeur (4) est mobile en translation en direction du deuxième chargeur (5) et/ou le deuxième chargeur (5) est mobile en translation en direction du premier chargeur (4).

10. Procédé d'injection mettant en oeuvre un moule d'injection (1) selon l'une quelconque des revendications 1 à 9, pour une seule pièce, comprenant les étapes suivantes :
a. Pose d'un insert (9) dans une deuxième empreinte de moulage (6) positionnée au niveau du deuxième poste (102) accessible depuis l'extérieur du moule lorsque le moule d'injection (1) est fermé,
b. injection d'une première matière sur l'insert (9) posé préalablement, l'injection étant réalisée dans un espace de moulage délimité par une première empreinte de moulage (6) et une première empreinte complémentaire de moulage (7) appairées au niveau du premier poste (101), lorsque le moule d'injection (1) est fermé,
c. éjection de la pièce injectée (10) avec insert (9) au niveau du deuxième poste (102) ou d'un troisième poste (103) accessible depuis l'extérieur du moule d'injection (1) lorsque le moule d'injection (1) est fermé.

11. Procédé d'injection selon la revendication 10, dans lequel entre les étapes de pose d'insert et/ou d'injection et/ou d'éjection, une étape de translation du premier chargeur (4) ou du deuxième chargeur (5) par rapport respectivement au deuxième chargeur (5) ou au premier chargeur (4) est réalisée.

12. Procédé d'injection selon l'une quelconque des revendications 10 ou 11, dans lequel les étapes de pose d'insert et/ou d'injection et/ou d'éjection sont réalisées en simultanée lorsque plusieurs pièces (10) sont réalisées dans le moule d'injection (1) en même temps.

13. Procédé d'injection selon l'une quelconque des revendications 10 à 12, dans lequel au moins une étape supplémentaire de surmoulage et/ou de refroidissement et/ou d'injection d'une seconde matière et/ou de deuxième pose d'insert (9) est réalisée avant l'étape d'éjection.

## Patentansprüche

1. Spritzgussform (1), die mindestens einen ersten Formteil (2), mindestens einen zweiten Formteil (3), der gegenüber dem ersten Formteil (2) positioniert ist, wobei der erste Formteil (2) oder der zweite Formteil (3) konfiguriert ist, um axial in Bezug jeweils auf den zweiten Formteil (3) oder den ersten Formteil (2) zwischen mindestens einer Öffnungsposition der Spritzgussform (1) und einer Schließposition der Spritzgussform (1) beweglich zu sein, mindestens einen ersten Arbeitsposten (101), Spritzgussposten genannt, und mindestens einen zweiten Arbeitsposten (102), Einsatzposten genannt, umfasst, wobei der erste Formteil (2) Folgendes umfasst:
- mindestens eine erste bewegliche Ladevorrichtung (4), die konfiguriert ist, um sich mindestens in Drehung mindestens zwischen dem ersten Posten (101) und dem zweiten Posten (102) zu bewegen, wobei die erste Ladevorrichtung (4) zwischen dem ersten Formteil (2) und dem zweiten Formteil (3) positioniert ist,
- mindestens einen ersten Formabdruck (6), der dazu bestimmt ist, im Bereich des ersten Postens (101) positioniert zu sein, und mindestens einen zweiten Formabdruck (6), der dazu bestimmt ist, im Bereich des zweiten Postens (102) positioniert zu sein, wobei der zweite Formteil (3) Folgendes umfasst:
- mindestens eine zweite Ladevorrichtung (5), die zwischen der ersten Ladevorrichtung (4) und dem zweiten Formteil (3) positioniert ist, wobei die zweite Ladevorrichtung (5) mindestens teilweise gegenüber der ersten Ladevorrichtung (4) eingerichtet ist,
- mindestens einen ersten komplementären Formabdruck (7), der dazu bestimmt ist, im Bereich des ersten Postens (101) positioniert und konfiguriert zu sein, um mit dem ersten Formabdruck (6) des ersten Formteils (2) zusammenzuwirken, der dazu bestimmt ist, im Bereich des ersten Postens (101) positioniert zu sein, so dass ein Formraum abgegrenzt wird, wenn die Spritzgussform (1) in Schließposition ist, und der erste komplementäre Formabdruck (7) gegenüber dem ersten Formabdruck (6) des ersten Formteils (2), der im Bereich des ersten Postens (101) positioniert ist, positioniert zu sein,
**dadurch gekennzeichnet, dass**, wenn die Spritzgussform (1) in Schließposition ist, der zweite Posten (102) konfiguriert und eingerichtet ist, um von außerhalb der Spritzgussform (1) her zugänglich zu sein, während der erste Posten (101) unzugänglich ist.

2. Spritzgussform nach Anspruch 1, die einen dritten Posten (103), Auswurfposten genannt, umfasst.

3. Spritzgussform nach Anspruch 2, wobei die zweite Ladevorrichtung (5) konfiguriert ist, um sich mindestens in Drehung mindestens zwischen dem ersten Posten (101) und dem dritten Posten (103) zu bewegen.

4. Spritzgussform nach einem der Ansprüche 2 oder 3, wobei der dritte Posten (103) konfiguriert und eingerichtet ist, um von außerhalb der Spritzgussform (1) zugänglich zu sein, wenn die Spritzgussform (1) in Schließposition ist.

5. Spritzgussform nach einem der Ansprüche 1 bis 4, wobei die Formabdrücke (6) des ersten Formteils Matrixabdrücke oder Kernabdrücke sind und die komplementären Formabdrücke (7) des zweiten Formteils (3) jeweils Kernabdrücke oder Matrixabdrücke sind.

6. Spritzgussform nach einem der Ansprüche 1 bis 5, die mindestens einen vierten Arbeitsposten (104) zum Überspritzen oder Zusammenfügen oder Abkühlen oder Einspritzen eines anderen Materials oder Erhitzen oder Einrasten oder Spiegelschweißen oder überspritzten Verbindungsschweißen oder Dekoraufbringen oder Lasermarkieren umfasst.

7. Spritzgussform nach Anspruch 6, wobei der vierte Posten (104) konfiguriert und eingerichtet ist, um von außerhalb der Spritzgussform (1) zugänglich zu sein, wenn die Spritzgussform (1) in Schließposition ist.

8. Spritzgussform nach einem der Ansprüche 5 oder 6, wobei die zweite Ladevorrichtung (5) zwischen dem ersten Posten (101), dem dritten Posten (103) und dem vierten Posten (104) beweglich ist.

9. Spritzgussform nach einem der Ansprüche 1 bis 8, wobei die erste Ladevorrichtung (4) in Verschiebung in Richtung der zweiten Ladevorrichtung (5) beweglich ist und/oder die zweite Ladevorrichtung (5) in Verschiebung in Richtung der ersten Ladevorrichtung (4) beweglich ist.

10. Spritzgussverfahren, das eine Spritzgussform (1) nach einem der Ansprüche 1 bis 9 umsetzt, für ein einziges Teil, umfassend die folgenden Schritte:
a. Anbringen eines Einsatzes (9) in dem zweiten Formabdruck (6), der im Bereich des zweiten Postens (102) positioniert ist, der von außerhalb der Form her zugänglich ist, wenn die Spritzgussform (1) geschlossen ist,
b. Einspritzen eines ersten Materials auf dem Einsatz (9), der zuvor positioniert wurde, wobei das Einspritzen in einem Formraum ausgeführt wird, der von einem ersten Formabdruck (6) und einem ersten komplementären Formabdruck (7) abgegrenzt ist, die im Bereich des ersten Postens (101) gepaart sind, wenn die Spritzgussform (1) geschlossen ist,
c. Auswerfen des Spritzgussteils (10) mit dem Einsatz (9) im Bereich des zweiten Postens (102) oder eines dritten Postens (103), der von außerhalb der Spritzgussform (1) her zugänglich ist, wenn die Spritzgussform (1) geschlossen ist.

11. Spritzgussverfahren nach Anspruch 10, wobei zwischen den Schritten des Anbringens eines Einsatzes und/oder des Einspritzens und/oder des Auswerfens ein Verschiebungsschritt der ersten Ladevorrichtung (4) oder der zweiten Ladevorrichtung (5) jeweils in Bezug auf die zweite Ladevorrichtung (5) oder die erste Ladevorrichtung (4) ausgeführt wird.

12. Spritzgussverfahren nach einem der Ansprüche 10 oder 11, wobei die Schritte des Anbringens eines Einsatzes und/oder des Einspritzens und/oder des Auswerfens gleichzeitig ausgeführt werden, wenn mehrere Teile (10) in der Spritzgussform (1) gleichzeitig gefertigt werden.

13. Spritzgussverfahren nach einem der Ansprüche 10 bis 12, wobei mindestens ein zusätzlicher Überspritzschritt und/oder Kühlschritt und/oder Einspritzschritt eines zweiten Materials und/oder ein zweites Anbringen eines Einsatzes (9) vor dem Auswurfschritt ausgeführt wird.

## Claims

1. An injection mold (1) comprising at least one first mold portion (2), at least a second mold portion (3) positioned facing the first mold portion (2), the first mold portion (2) or the second mold portion (3) being configured to be axially movable relative to respectively the second portion (3) or the first mold portion (2) between at least an opening position of the injection mold (1) and a closing position of the injection mold (1), at least one first work station (101) called injection station, and at least a second work station (102) called insert laying station, the first mold portion (2) comprising:
- at least one first movable loader (4) configured to move at least in rotation at least between the first station (101) and the second station (102), said first loader (4) being positioned between the first mold portion (2) and the second mold portion (3),
- at least one first molding cavity (6) intended to be positioned at the first station (101) and at least a second molding cavity (6) intended to be positioned at the second station (102), the second mold portion (3) comprising:
- at least a second loader (5) positioned between the first loader (4) and the second mold portion (3), the second loader (5) being arranged at least partially facing the first loader (4),
- at least a first complementary molding cavity (7) intended to be positioned at the first station (101) and configured to cooperate with the first molding cavity (6) of the first mold portion (2) intended to be positioned at the first station (101), so as to delimit a molding space when the injection mold (1) is in the closing position and so as the first complementary molding cavity (7) is positioned facing the first molding cavity (6) of the first mold portion (2) positioned at the first station (101),
**characterized in that in that**, when the injection mold (1) is in the closing position, the second station (102) is configured and arranged to be accessible from the outside of the injection mold (1) while the first station (101) is inaccessible.

2. The injection mold according to claim 1, comprising a third station (103) called ejection station.

3. The injection mold according to claim 2, wherein the second loader (5) is configured to move at least in rotation at least between the first station (101) and the third station (103).

4. The injection mold according to any one of claims 2 or 3, wherein the third station (103) is configured and arranged to be accessible from the outside of the injection mold (1) when said injection mold (1) is in the closing position.

5. The injection mold according to any one of claims 1 to 4, wherein the molding cavities (6) of the first mold portion are die or core cavities and respectively the complementary molding cavities (7) of the second mold portion (3) are core or die cavities.

6. The injection mold according to any one of claims 1 to 5, comprising at least a fourth work station (104) of overmolding or assembling or cooling or injecting another material or heating or ratcheting or mirror welding or welding by overmolded seal or decoration laying or laser marking.

7. The injection mold according to claim 6, wherein the fourth station (104) is configured and arranged to be accessible from the outside of the injection mold (1) when the injection mold (1) is in the closing position.

8. The injection mold according to any one of claims 5 or 6, wherein the second loader (5) is movable between the first station (101), the third station (103) and the fourth station (104).

9. The injection mold according to any one of claims 1 to 8, wherein the first loader (4) is movable in translation in direction of the second loader (5) and/or the second loader (5) is movable in translation in direction of the first loader (4).

10. An injection method implementing an injection mold (1) according to any one of claims 1 to 9, for only one part, comprising the following steps:
a. positioning an insert (9) in a second molding cavity (6),which is positioned at the second station (102) accessible from the outside of the mold when the injection mold (1) is closed,
b. injection of a first material on the previously laid insert (9), the injection being performed in a molding space delimited by a first molding cavity (6) and a first complementary molding cavity (7) paired at the first station (101), when the injection mold (1) is closed,
c. ejection of the injected part (10) with insert (9) at the second station (102) or a third station (103) accessible from the outside of the injection mold (1) when the injection mold (1) is closed.

11. The injection method according to claim 10, wherein, between the insert laying and/or injection and/or ejection steps, a translating step of the first loader (4) or of the second loader (5) relative to respectively the second loader (5) or to the first loader (4) is performed.

12. The injection method according to any one of claims 10 or 11, wherein the insert laying and/or injection and/or ejection steps are performed simultaneously when several parts (10) are performed in the injection mold (1) at the same time.

13. The injection method according to any one of claims 10 to 12, wherein at least one additional overmolding and/or cooling and/or second material injection and/or second insert (9) laying step is performed before the ejection step.
